# FASCICULE DE BREVET EUROPEEN

(11) **EP 1 711 244 B1**
(45) Date de publication et mention de la délivrance du brevet: **29.07.2009**
(21) Numéro de dépôt: 05717360.1
(22) Date de dépôt: 05.01.2005
(51) Int. Cl.: B01D 9/00, A23G 9/00, B29B 7/32, B01F 5/06

(54) **PROCEDE CONTINU DE CRISTALLISATION PARTIELLE D'UNE SOLUTION ET DISPOSITIF DE MISE EN OEUVRE**
KONTINUIERLICHES VERFAHREN ZUR TEILWEISEN KRISTALLISATION EINER LÖSUNG UND VORRICHTUNG ZUR DURCHFÜHRUNG DES VERFAHRENS
CONTINUOUS METHOD FOR PARTIALLY CRYSTALLISING A SOLUTION AND A DEVICE FOR CARRYING OUT SAID METHOD

(30) Priorité: 06.01.2004 FR 0400044
(43) Date de publication de la demande: 18.10.2006
(73) Titulaire: CENTRE NATIONAL DE LA RECHERCHE SCIENTIFIQUE (CNRS), 75016 Paris (FR)
(72) Inventeur: LE BAIL, Alain, Michel, Daniel, F-44000 Nantes (FR)
(74) Mandataire: Texier, Christian
(86) Numéro de dépôt international: PCT/FR2005/000011
(87) Numéro de publication internationale: WO 2005/068040

(56) Documents cités:
- EP-A- 0 765 605
- WO-A-00/72695
- WO-A-02/13618
- WO-A-92/07120
- DE-A- 10 111 679
- US-A- 4 334 783

## Description

### DOMAINE GENERAL DE L'INVENTION

L'invention concerne un procédé et un dispositif de cristallisation partielle d'une solution en écoulement permanent ou en écoulement semi permanent, par exemple en écoulement fluctuant.

### ETAT DE L'ART

Dans certaines applications, on souhaite pouvoir cristalliser partiellement une phase dissoute d'une solution en circulation dans un dispositif.

La congélation d'une solution est obtenue en abaissant sa température. La température de congélation commençante est la température pour laquelle les premiers cristaux de glace sont susceptibles d'apparaître.

Cependant, dans la pratique il faut abaisser la température sous la température de congélation commençante pour obtenir le démarrage de la cristallisation. Ce phénomène est appelé surfusion ou « supercooling » en anglais. Le phénomène d'apparition des premiers cristaux est appelé « rupture de surfusion » et l'écart entre la température de congélation commençante et la température à laquelle va démarrer la cristallisation est appelé « amplitude de surfusion ».

L'apparition des premiers cristaux est appelée « nucléation » et est un phénomène exothermique qui va libérer de la chaleur. La température du mélange comportant la solution et les cristaux de glace va donc remonter à une température légèrement inférieure à la température de congélation commençante lors de la rupture de surfusion. En continuant à refroidir le mélange, on va favoriser la croissance des cristaux formés lors de la rupture de surfusion et également déclencher l'apparition de nouveaux cristaux. Ce dernier phénomène est appelé cristallisation secondaire.

La fraction massique de cristaux de glace rapportée à l'unité de masse de la solution s'appelle le titre en glace.

La congélation partielle ou cristallisation partielle d'une solution vise donc, en partant d'une solution de titre massique en glace nul et dont la température est a priori supérieure ou égale à la température de congélation commençante, à obtenir une solution possédant un titre en glace supérieur à 0% et inférieur au titre maximum. Le titre maximum est défini comme le titre en glace obtenu à une température très inférieure à la température de congélation commençante (par exemple 40°C sous la température de congélation commençante).

Un système continu comporte un échangeur thermique dans lequel la cristallisation partielle s'effectue par refroidissement de la phase lors de la circulation de la solution.

La phase à cristalliser est généralement un sel ou un solvant dans une solution quelconque, aqueuse ou non.

Dans le cas d'une solution aqueuse, l'objectif est de former un liquide partiellement congelé contenant de fines particules de glace, afin que le fluide puisse toujours s'écouler dans le dispositif sous l'action d'une pompe.

On donne ici deux exemples possibles d'applications dans lesquelles une cristallisation partielle est souhaitée.

Un premier exemple d'applications concerne une glace binaire ou un sorbet, également appelé « binary ice » ou « ice slurry » en anglais, et utilisé comme fluide frigo-porteur dans un dispositif d'échange thermique. On définit un « sorbet » comme un mélange présentant un rapport pondéral d'environ 10 à 70% de glace.

De telles glaces binaires ou de tels sorbets sont généralement des solutions d'eau et d'alcool et/ou de sels et/ou de sucres, comme par exemple le chlorure de sodium, de calcium ou de potassium, le saccharose, etc. Les mélanges frigo-porteurs peuvent également être tout fluide susceptible de stocker l'énergie frigorifique sous forme de chaleur latente par solidification eau-glace.

Un deuxième exemple d'applications concerne les crèmes glacées alimentaires. Pour ces applications, il s'agit de congeler partiellement une préparation contenant principalement de l'eau et/ou du lait, des matières grasses et/ou des morceaux de fruits en y introduisant en plus des fines bulles d'air. Le volume d'air à introduire est sensiblement égal au volume de la préparation dans le cas d'une crème glacée alimentaire.

Plusieurs types de dispositifs de l'art antérieur permettent la mise en oeuvre d'une cristallisation partielle.

Un premier type de dispositifs est appelé « générateur à contact direct ». Dans ce type de dispositifs, on met le fluide à cristalliser directement en contact avec une surface refroidie.

Un deuxième type de dispositifs est appelé « générateur sous vide ». Dans ce type de dispositifs, on maintient le fluide à cristalliser partiellement proche de son point triple.

Les dispositifs de l'art antérieur présentent cependant des inconvénients.

Les générateurs à contact direct fonctionnent grâce à un raclage mécanique des particules cristallisées sur les parois de l'échangeur. Ils ont ainsi une puissance limitée par la puissance du dispositif de raclage mécanique. Ils sont de plus onéreux, du fait de la présence de pièces et de mécanismes en rotation.

Les générateurs sous vide sont très complexes, très onéreux et très encombrants. Ils sont par conséquent mal adaptés aux applications visées, notamment alimentaires. Ils sont en effet conçus pour un type et un volume particulier de production ; ils ne sont pas modulaires et sont donc non flexibles. On connait par WO 02/13618 A, WO 00/72695 A, et EP-A- 0 765 605 des dispositifs comportant des mélangeurs statiques.

### PRESENTATION DE L'INVENTION

L'invention a pour but de résoudre au moins un des inconvénients précédents.

Un des buts de l'invention est de proposer une technique simple de cristallisation partielle d'une phase dans une solution quelconque, aqueuse ou non.

Ainsi, un des buts de l'invention est de proposer une technique peu onéreuse de cristallisation partielle d'une phase dans une solution quelconque, aqueuse ou non.

Notamment, un des buts de l'invention est de proposer un dispositif de cristallisation partielle n'utilisant pas de pièces ou de mécanismes en mouvement ou en rotation.

Egalement, un des buts de l'invention est de proposer un dispositif de cristallisation partielle ne maintenant pas la phase à cristalliser partiellement proche de son point triple.

Un des autres buts de l'invention est de proposer un dispositif de cristallisation partielle d'une phase qui soit modulaire et de puissance unitaire significative.

Un des autres buts de l'invention est de proposer un dispositif de cristallisation partielle d'une phase qui de par sa modularité puisse être mis en parallèle afin de s'adapter à plusieurs types et volumes de production, notamment dans le domaine alimentaire.

A cet effet, l'invention propose un dispositif de cristallisation partielle d'une phase dans une solution selon la revendication 1

Le dispositif de cristallisation comporte également avantageusement des organes statiques de mélange de la solution de sorte que les particules cristallisées lors du phénomène de rupture de surfusion de la solution en écoulement soient continuellement mélangées avec la solution lors de la circulation de ladite solution.

Les moyens aptes à déclencher la cristallisation et les organes statiques de mélange peuvent en outre être constitués, d'éléments formant obstacles disposés à l'intérieur de l'écoulement (aiguille, plaque, ...). Ils peuvent également en outre être des changements de direction de circulation de l'écoulement.

Les moyens de maintien de surfusion, de rupture ou de mélange peuvent être une combinaison de différents matériaux constitutifs de l'échangeur ou de matériaux disposés au contact de la solution à l'intérieur de l'échangeur. Le matériau (ainsi que son état de surface qui peut être spécifique) situé en amont du point de rupture dans l'échangeur favorise le phénomène de surfusion alors que le matériau (ainsi que son état de surface qui peut être spécifique) situé en aval favorise la rupture de la surfusion. Ainsi, un plastique hydrophobe avec un état de surface très lisse (faible rugosité) aura tendance à retarder la rupture de surfusion et permettra d'abaisser la température sous la température de congélation commençante sans cristallisation alors qu'un métal avec un état de surface rugueux aura tendance a priori à favoriser la rupture de la surfusion (déclenchement de la cristallisation).

La section du tube pourra également être variable après la zone de rupture de la surfusion, afin que lors de la phase de croissance des cristaux formés lors de la surfusion ou lors de la phase de nucléation secondaire survenant après la rupture de la surfusion, l'écoulement de la solution dont la viscosité va fortement augmenter et dont la masse volumique apparente va diminuer (expansion volumique due à la cristallisation de l'eau) puisse s'écouler sans nécessiter de pression amont trop élevée.

La mise en circulation du fluide est faite à débit constant ou à débit fluctuant, c'est à dire que les phases d'écoulement sont suivies de phases pendant lesquelles le fluide est immobile ou s'écoule à une vitesse moindre. Ces fluctuations peuvent être de type tout ou rien (passage instantané d'un débit nul ou faible à un débit nominal) ou de type sinusoïdale ou encore de type dent de scie. On peut donc également faire circuler le fluide selon des phases d'écoulements successives à vitesses variables.

L'invention est également avantageusement complétée par les caractéristiques reprises dans les revendications 2 à 16, prises seules ou en une quelconque de leur combinaison techniquement possible. Par exemple:
- le changement de direction est un coude dans le circuit de circulation, et/ou une chicane, et/ou au moins un changement de section intérieure du circuit de circulation ;
- le circuit de l'échangeur comporte au moins une vanne permettant de réguler le débit de la solution ;
- la vanne est pilotée manuellement ou est pilotée par un système autonome du genre thermostat prenant en compte un ou des paramètres ou la différence entre deux ou plusieurs paramètres. Ces paramètres peuvent être la température d'entrée de la solution à cristalliser ou une température (température de la solution, température du tube de l'échangeur, température du fluide primaire utilisé pour refroidir l'échangeur) située à tout endroit situé en amont de la zone de rupture de surfusion, la température de sortie de la solution à cristalliser ou une température (température de la solution, température du tube de l'échangeur, température du fluide primaire utilisé pour refroidir l'échangeur) à tout endroit situé entre la zone de rupture de surfusion et la sortie de l'échangeur, la température de la solution au moment de la rupture de surfusion ou le débit d'alimentation amont en particulier dans le cas ou plusieurs dispositifs (échangeurs) sont alimentés par une même pompe.
- le circuit de circulation comporte des moyens d'introduction de bulles de gaz dans la solution ;
- les moyens d'introduction du gaz sont placés dans la circulation de la solution ou au niveau des parois d'un tube.

L'invention concerne également un ensemble comportant une pluralité de dispositifs selon l'invention ou une pluralité de parties d'un tel dispositif.

L'invention concerne également un procédé d'utilisation d'un tel dispositif.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
la figure 1 représente schématiquement un mode de réalisation possible d'un dispositif selon l'invention;
la figure 2 représente schématiquement un mode de réalisation d'un dispositif selon l'invention dans lequel on a représenté plus précisément un organe de mélange;
les figures 3 à 5 représentent schématiquement plusieurs modes de réalisation possibles d'organes de mélange;
la figure 6 représente schématiquement une coupe longitudinale d'un tuyau d'un circuit de circulation d'un dispositif selon l'invention; et
les figures 7 et 8 représentent schématiquement des modes de réalisation de dispositifs d'introduction d'un gaz dans le circuit de circulation ; et
la figure 9 représente schématiquement des modes de réalisation d'organes de mélange à l'intérieur d'un tube.

Dans toutes les figures, les éléments similaires portent des références numériques identiques.

### DESCRIPTION DETAILLEE

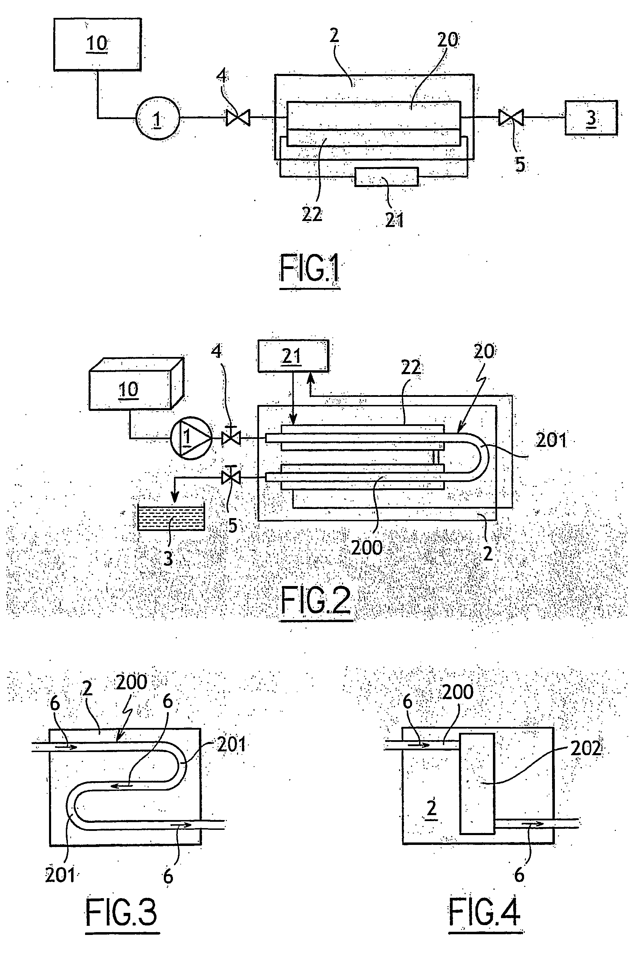

Comme le montrent schématiquement les figures 1 et 2, un dispositif possible selon l'invention comprend essentiellement au moins une pompe 1 permettant de faire circuler une solution dans un échangeur thermique, référencé par 2, et relié en entrée à un réservoir 10 de la solution et en sortie à récipient 3 de la solution partiellement cristallisée.

Chaque pompe 1 est connue de l'homme du métier. Toutefois, la commande de la pompe, qui est une pompe volumétrique ou non, permettra de faire varier de débit de fluide au cours du procédé en fonction d'un ou de plusieurs système(s) de régulation associés à des capteurs disposés judicieusement dans le dispositif.

La mise en circulation du fluide est faite à débit constant ou à débit fluctuant, c'est à dire que les phases d'écoulement sont suivies de phases pendant lesquelles le fluide est immobile ou s'écoule à une vitesse moindre. Ces fluctuations peuvent être de type tout ou rien (passage instantané d'un débit nul ou faible à un débit nominal) ou de type sinusoïdale ou encore de type dent de scie. On peut donc également faire circuler le fluide selon des phases d'écoulements successives à vitesses variables.

Une vanne 4 est disposée entre la pompe 1 et l'entrée de l'échangeur 2, tandis qu'une vanne 5 est disposée en sortie de l'échangeur 2 avant le récipient 3. La vanne 5 assure un mélange homogène de la solution en sortie de l'échangeur 2 et permet d'ajuster son débit.

Chaque vanne peut être pilotée manuellement ou par un système autonome du genre thermostat prenant en compte un ou plusieurs des paramètres suivants ou la différence entre deux ou plusieurs paramètres. Les paramètres peuvent être :
- la température d'entrée de la solution à cristalliser ou une température (température de la solution, température du tube de l'échangeur, température du fluide primaire utilisé pour refroidir l'échangeur) située à tout endroit situé en amont de la zone de rupture de surfusion ;
- la température de sortie de la solution à cristalliser ou une température (température de la solution, température du tube de l'échangeur, température du fluide primaire utilisé pour refroidir l'échangeur) à tout endroit situé entre la zone de rupture de surfusion et la sortie de l'échangeur ; et/ou
- la température de la solution au moment de la rupture de surfusion
ou le débit d'alimentation amont en particulier dans le cas ou plusieurs dispositifs (échangeurs) sont alimentés par une même pompe.

L'échangeur thermique 2 comporte principalement un circuit de circulation 20 de la solution, en contact avec un circuit 22 de refroidissement. Ainsi la pompe 1 fait circuler la solution dans le circuit 20 de l'échangeur 2. La longueur du circuit est typiquement de l'ordre de quelques mètres (de 1 à 5 mètres environ).

Un groupe frigorifique 21 externe permet de faire circuler un fluide réfrigéré à une température négative dans le circuit 22 de refroidissement.

Grâce au groupe frigorifique 21 et au circuit de refroidissement 22 du fluide réfrigéré, la paroi extérieure du circuit 20 de circulation de la solution est maintenue à une température négative, par exemple de l'ordre de -5°C à -30° Celsius. Cette température négative permet une réfrigération efficace de la solution contenue dans le dispositif.

Le groupe frigorifique 21 peut comporter un système par détente directe d'un fluide frigorigène ou tout autre dispositif de réfrigération connu de l'homme du métier.

Le fluide frigorigène circulant dans le circuit 22 peut être par exemple un fluide cryogénique comme de l'azote liquide ou un fluide frigorigène utilisé dans une machine à compression mécanique.

On rappelle que la solution est par exemple un liquide frigo-porteur ou une crème glacée alimentaire.

Dans tous les cas, la solution doit être introduite dans l'échangeur 2 à une température aussi proche que possible de la température de congélation commençante.

Comme le montre plus précisément la figure 2, le circuit de circulation 20 est principalement constitué de tubes 200. La solution circule à l'intérieur des tubes 200, alors que le fluide cryogénique ou frigorigène utilisé pour refroidir la solution circule à l'extérieur des tubes 200 dans le circuit 22.

Préférentiellement, les tubes 200 formant le circuit 20 ont un diamètre intérieur réduit, par exemple de l'ordre de 5 à 30 mm. Chaque tube 200 est en matière plastique ou en métal ou en verre.

L'échangeur 2 comporte une zone comportant des moyens statiques de maintien de surfusion pour retarder l'apparition de cristaux et une zone comportant des moyens statiques de rupture de surfusion pour permettre l'apparition de cristaux.

Les moyens de maintien de la surfusion permettent notamment de contrôler l'amplitude de la surfusion. Ils sont bien entendu placés en amont des moyens de rupture.

A cet effet, chaque tube 200 est constitué d'un matériau ou est recouvert d'une pellicule sur sa face interne pour former un revêtement se présentant sous la forme d'un matériau et/ou d'un état de surface aptes à retarder l'apparition de cristaux. La pellicule peut recouvrir tout ou partie de la face interne de chaque tube. La pellicule peut être formée d'un film plastique hydrophobe ou en verre ou d'une peinture spéciale. L'état de surface présente avantageusement une faible rugosité.

Les moyens de rupture de la surfusion comportent au moins un changement de revêtement des parois internes de chaque tube par rapport au moyens de maintien. De préférence, ils comportent en outre au moins un changement de direction de la circulation de la solution, et/ou au moins un obstacle à la circulation de la solution sur les parois intérieures de chaque tube.

La figure 3 montre que le changement de direction de la circulation de la solution peut se présenter sous la forme de coude 201 dans les tubes. Chaque coude 201 ne forme pas forcément un demi tour complet de la circulation 6 de la solution, mais peut simplement imposer un changement de direction au circuit de circulation 20. D'une manière générale, on désigne par changement de direction tout dispositif dans le circuit de circulation 20 tel que la génératrice de la surface interne d'une portion de tube rectiligne se trouvant en amont sur une longueur minimale de 10 fois le diamètre du tube forme un angle de rupture de plus de 5° environ par rapport à une portion de tube en aval.

La figure 4 montre que le changement de direction peut également se présenter sous forme de chicane 202. L'angle de rupture est ainsi égal à 90° dans ce cas.

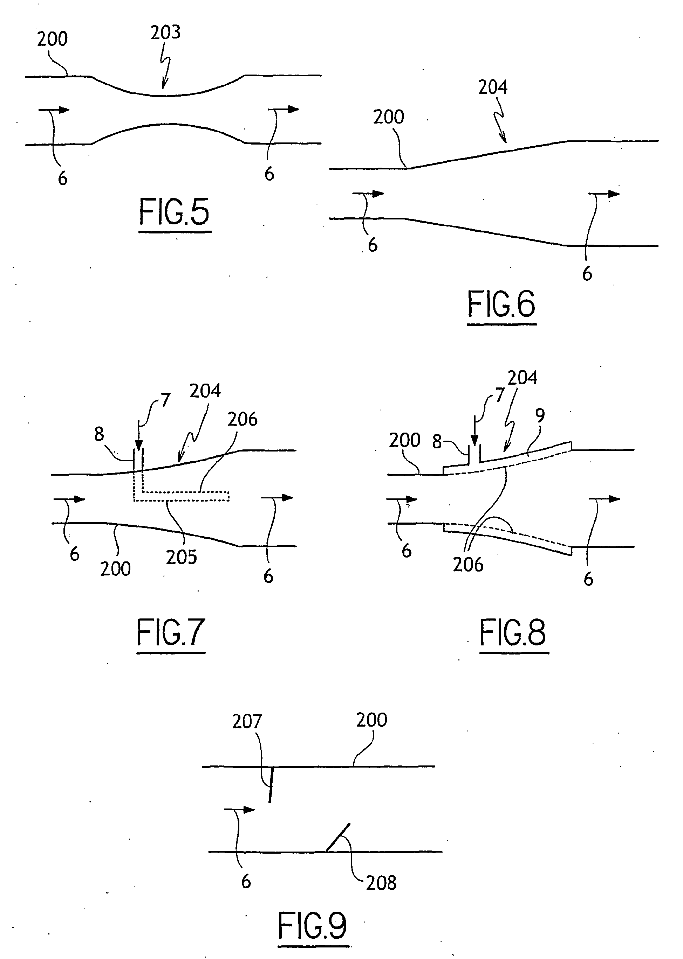

La figure 5 montre que le changement de direction peut également être un changement 203 de section du tube 200 du circuit 20 de circulation.

Le changement 203 de section est préférentiellement un rétrécissement de la section. Le rétrécissement 203 est de préférence local, la section du tube en amont et en aval du rétrécissement 203 étant sensiblement la même. Le rétrécissement s'effectue sur une longueur sensiblement égale à 3 fois le diamètre du tube 200 avant le rétrécissement.

La figure 9 montre que les obstacles 207 et 208 disposés à l'intérieur du tube 200 peuvent former les moyens de rupture de surfusion supplémentaires. Les obstacles peuvent par exemple se présenter sous forme de plaques ou d'ailettes 207 ou 208 s'étendant perpendiculairement à la paroi interne du tube 200 ou de façon oblique. Les obstacles 207 ou 208 peuvent avoir de nombreuses formes différentes. Ils peuvent également par exemple se présenter sous forme d'aiguilles. Les obstacles 207 et 208 sont rapportés ou venus de matière sur les parois du tube 200.

Le changement de revêtement des parois internes se présente sous la forme d'un changement de matériau et/ou d'un changement de l'état de surface, aptes à rompre la surfusion et permettre l'apparition de cristaux. Le matériau au niveau des moyens de rupture est préférentiellement un métal. Le changement d'état de surface au niveau des moyens de rupture s'effectue vers une plus forte rugosité.

Les organes de mélange comportent au moins un revêtement anti-accrochage sur au moins une partie des parois internes de chaque tube 200. De préférence, ils comportent en outre au moins un changement de direction de la circulation de la solution, et/ou au moins un obstacle 207, 208 à la circulation de la solution sur les parois intérieures de chaque tube.

Le revêtement anti-accrochage peut se présenter sous la forme d'une pellicule sur la face interne des tubes. La pellicule peut recouvrir tout ou partie de la face interne de chaque tube. Le but de la pellicule est de limiter l'accrochage des particules de glaces formées lors de la cristallisation sur les parois des tubes 200.

La figure 2 montre un exemple de la présence des organes statiques de mélange - ici référencés par 201 - dans le circuit 20 de l'échangeur 2 permettant de mélanger continuellement les particules cristallisées au niveau de la paroi intérieure du circuit 20 à l'ensemble de la solution au niveau du ou après le point de rupture.

La figure 2 ne représente qu'un seul organe de mélange. Bien entendu, l'échangeur peut comporter plusieurs organes de mélange disposés le long du circuit 20.

Lors des échanges thermiques, les particules cristallisées le sont au niveau de la paroi interne des tubes 200 et viennent former une couronne.

Les organes de mélanges permettent de décoller la couronne de particules cristallisées et permettent ainsi un mélange de ces particules à la partie centrale de la solution en circulation.

Plusieurs modes de réalisation d'organes de mélange sont possibles.

La figure 3 montre que les organes de mélange du circuit 20 peuvent se présenter sous la forme de coude 201 dans les tubes. Chaque coude 201 ne forme pas forcément un demi tour complet de la circulation 6 de la solution, mais peut simplement imposer un changement de direction au circuit de circulation 20.

D'une manière générale, on désigne par « organe de mélange » tout dispositif dans le circuit de circulation 20 tel que la génératrice de la surface interne d'une portion de tube rectiligne se trouvant en amont sur une longueur minimale de 10 fois le diamètre du tube forme un angle de rupture de plus de 5° environ par rapport à une portion de tube en aval.

La figure 4 montre que les organes de mélange peuvent également se présenter sous forme de chicane 202. L'angle de rupture est ainsi égal à 90° dans ce cas.

La figure 5 montre que les organes de mélange peuvent également être un changement 203 de section du tube 200 du circuit 20 de circulation.

Le changement 203 de section est préférentiellement un rétrécissement de la section. Le rétrécissement 203 est de préférence local, la section du tube en amont et en aval du rétrécissement 203 étant sensiblement la même. Le rétrécissement s'effectue sur une longueur sensiblement égale à 3 fois le diamètre du tube 200 avant le rétrécissement.

La figure 9 montre que les organes de mélange peuvent également être des obstacles 207 et 208 disposés à l'intérieur du tube 200. Les obstacles peuvent par exemple se présenter sous forme de plaques ou d'ailettes 207 ou 208 s'étendant perpendiculairement à la paroi interne du tube 200 ou de façon oblique. Les obstacles 207 ou 208 peuvent avoir de nombreuses formes différentes. Ils peuvent également par exemple se présenter sous forme d'aiguilles.

Les obstacles 207 et 208 sont rapportés ou venus de matière sur les parois du tube 200.

Les obstacles 207 et 208 constituent des organes de mélange. On rappelle qu'ils peuvent également constituer des dispositifs permettant de contrôler la zone de déclenchement de la cristallisation. C'est le cas notamment des aiguilles.

La figure 6 montre que le diamètre intérieur du circuit de circulation 20 n'est pas nécessairement constant tout au long de la circulation.

La masse volumique de la solution s'abaisse au fur et à mesure de la cristallisation, notamment du fait que la glace a un volume spécifique supérieur à celui de l'eau par exemple.

Ainsi, il est judicieux d'augmenter la section du tube 200 du circuit 20 au moment de la congélation de la phase dans la solution, afin de faciliter sa circulation.

De plus, une modification de la section de passage des tubes 200 constituant le circuit entraîne une modification de la vitesse de circulation et de la pression de la solution.

La modification de la vitesse de circulation influence le temps de contact entre la solution et la surface interne refroidie des tubes 200. On peut donc agir sur ce paramètre pour contrôler la vitesse de cristallisation de la solution.

De plus, une modification de la pression de la solution permet également de permettre une plus grande cristallisation, comme on le décrit dans la suite de la présente description.

On rappelle que lors de la circulation de la solution dans l'échangeur 2, la cristallisation s'effectue principalement par échange thermique au niveau des parois entre le circuit 20 et le circuit 22.

Cependant, avantageusement et comme le montrent les figures 7 et 8, on peut introduire dans la solution du gaz sous forme de microbulles.

La détente des microbulles de gaz d'air ou d'azote introduites dans la solution produit un effet frigorifique qui contribue également à la cristallisation de la phase de la solution.

Une modification de la pression de la solution permet donc de réaliser une détente des microbulles de gaz dans la solution.

Ce gaz est préférentiellement du diazote ou de l'air dans le cas de crèmes glacées alimentaires. On obtient donc ainsi formation d'une émulsion ou d'une mousse dans le circuit 20.

Comme le montrent les figures 7 et 8, le gaz est introduit dans le circuit 20 de circulation grâce à des buses 205 et 206.

La figure 7 montre un premier mode de réalisation d'une buse 205 selon lequel un conduit 8 est introduit dans la circulation 6 de la solution à travers la paroi du tube 200 sensiblement perpendiculairement à la circulation 6. Le conduit 8 est coudé dans le sens de la circulation et de sorte que l'extrémité du conduit 8 soit sensiblement parallèle à la circulation 6, sur une longueur par exemple égale à 2 ou 3 fois le diamètre du tube 200 en amont du conduit 8. Des microperforations 206 au niveau de l'extrémité du conduit 8 permettent de relâcher les microbulles de gaz de façon homogène dans la solution 6.

Un élargissement 204 de la section du tube 200 est avantageusement pratiqué au droit de l'extrémité du conduit, de sorte que la détente du gaz dans la solution soit facilitée, grâce à la modification de la vitesse de circulation de la solution et à sa pression.

La figure 8 montre un deuxième mode de réalisation d'une buse 206 selon lequel un conduit 8 permet d'introduire le gaz dans une chambre 9 d'équilibrage ajustée sur la paroi externe du tube 200 du circuit 20.

La chambre 9 s'étend sensiblement sur une longueur sensiblement égale à 3 à 5 fois le diamètre du tube 200, le diamètre étant celui en amont du conduit 8. Des microperforations 206 entre la chambre 9 et la paroi du tube 200 permettent de relâcher les microbulles de gaz de façon homogène dans la solution 6.

Un élargissement 204 de la section du tube 200 est avantageusement pratiqué au droit de l'extrémité du conduit, de sorte que la détente du gaz dans la solution soit facilitée grâce à la modification de la vitesse de circulation de la solution et à sa pression.

Dans les deux cas, le gaz est introduit sous pression dans la solution.

Le gaz peut également être introduit dans la solution avant que celle-ci n'entre dans l'échangeur 2, et ce avant ou après la pompe 1 de circulation. On réalise alors la congélation de l'émulsion contenant déjà les microbulles de gaz.

Bien entendu, plusieurs tubes 200 peuvent être disposés en parallèles afin d'augmenter le débit massique du dispositif, ou par exemple afin d'assembler des crèmes glacées de parfums différents.

Ainsi, le dispositif peut être modulaire et comporter plusieurs échangeurs selon l'invention, avec une ou plusieurs pompes de circulation, la puissance étant alors adaptée par le nombre de tubes.

On peut ainsi prévoir un montage en calandre classique de l'échangeur selon l'invention, avec une détente directe du côté extérieur des tubes.

Des tests pratiqués montrent qu'un dispositif possible selon l'invention peut avoir un débit d'environ 90 g/minute de sorbet sortant avec un titre en glace compris entre 30-50% pour une solution initiale eau-alcool à 10% en masse. La température de sortie du sorbet est égale à -5 -10 °C environ.

Dans le dispositif sur lequel ont été effectués les tests, le diamètre intérieur du tube est égal à 8 mm et la longueur du tube est égalé à 4 m. Il développe une puissance par tube d'environ 270 W.

La puissance est donc forte et le dispositif peu onéreux, car simple de conception. Il ne possède en effet aucun organe de mélange mobile.

Le dispositif est donc avantageusement mais non limitativement utilisé dans le domaine alimentaire pour la production de crèmes glacées, dans le domaine de la production de fluides frigo-porteurs, notamment pour la production de dispositifs de climatisation.

## Revendications

1. Dispositif de cristallisation partielle d'une phase dans une solution, comportant au moins une pompe (1) de mise en circulation de la solution dans un circuit (20) d'un échangeur (2) thermique formé d'au moins un tube (200) en contact avec un circuit (22) de refroidissement, **caractérisé en ce que** le circuit (20) de l'échangeur (2) comporte
- une zone comportant des moyens statiques de maintien de surfusion pour retarder l'apparition de cristaux, les moyens de maintien de la surfusion comportant un revêtement anti-accrochage sur au moins une partie des parois internes de chaque tube (200), le revêtement se présentant sous la forme d'un matériau et/ou d'un état de surface aptes à retarder l'apparition de cristaux, et
- une zone comportant des moyens statiques de rupture de surfusion pour permettre l'apparition de cristaux, les moyens de rupture de la surfusion comportant au moins un changement de revêtement des parois internes de chaque tube, le changement de revêtement des parois internes se présentent sous la forme d'un changement de matériau et/ou d'un changement de l'état de surface, aptes à rompre la surfusion et permettre l'apparition de cristaux.

2. Dispositif selon la revendication précédente, comportant en outre une zone comportant des organes statiques de mélange de la solution de sorte que les particules cristallisées de la phase soient continuellement mélangées avec la solution lors de la circulation de ladite solution.

3. Dispositif selon la revendication 1 ou 2, dans lequel le matériau est un plastique hydrophobe ou du verre.

4. Dispositif selon l'une des revendications 1 à 3, dans lequel l'état de surface présente une faible rugosité.

5. Dispositif selon l'une des revendications 1 à 4, dans lequel les moyens de rupture de la surfusion comportent en outre au moins un changement de direction de la circulation de la solution, et/ou au moins un obstacle (207, 208) à la circulation de la solution sur les parois intérieures de chaque tube. .

6. Dispositif selon l'une des revendications 1 à 5, dans lequel le matériau au niveau des moyens de rupture de surfusion est un métal.

7. Dispositif selon l'une des revendications 1 à 6, dans lequel le changement d'état de surface au niveau des moyens de rupture de surfusion s'effectue vers une plus forte rugosité.

8. Dispositif selon l'une des revendications 2 à 7, dans lequel les organes de mélange comportent au moins un revêtement anti-accrochage sur au moins une partie des parois internes de chaque tube (200), et/ou au moins un changement de direction de la circulation de la solution, et/ou au moins un obstacle (207, 208) à la circulation de la solution sur les parois intérieures de chaque tube.

9. Dispositif selon l'une des revendications 5 à 8, dans lequel le changement de direction est un coude (201) dans le circuit de circulation, et/ou une chicane (202), et/ou au moins un changement (203) de section intérieure du circuit de circulation.

10. Dispositif selon l'une des revendications 5 à 9, dans lequel les obstacles (207, 208) à la circulation de la solution comportent des aiguilles et/ou des plaques.

11. Dispositif selon l'une des revendications précédentes, dans lequel la section intérieure du circuit augmente progressivement (204).

12. Dispositif selon l'une des revendications précédentes, dans lequel le circuit de l'échangeur comporte au moins une vanne (4, 5).

13. Dispositif selon la revendication précédente, dans lequel la vanne est placée en amont ou en aval de l'échangeur et permet de régler le débit d'écoulement de la solution afin d'en contrôler le taux de cristallisation ou le titre en glace.

14. Dispositif selon l'une des revendications précédentes, dans lequel la pompe est apte à faire circuler la solution de façon variable dans le temps.

15. Dispositif selon l'une des revendications précédentes, dans lequel le circuit de circulation comporte des moyens (205, 206) d'introduction de bulles de gaz dans la solution,

16. Dispositif selon la revendication précédente, dans lequel les moyens (205, 206) d'introduction du gaz sont placés dans la circulation de la solution ou au niveau des parois d'un tube.

17. Ensemble, **caractérisé en ce qu'**il comporte une pluralité de dispositifs selon l'une des revendications qui précèdent.

18. Procédé de cristallisation partielle d'une phase dans une solution, comportant une étape consistant à mettre en circulation la solution dans un circuit (20) d'un échangeur (2) thermique forme d'au moins un tube (200) grâce à au moins une pompe (1), **caractérisé en ce qu'**il comporte une étape consistant à :
- maintenir la température sous la température de congélation commençante pour retarder l'apparition de cristaux grâce à des moyens statiques de maintien de la surfusion, les moyens de maintien de la surfusion comportant un revêtement anti-accrochage sur au moins une partie des parois internes de chaque tube (200), le revêtement se présentant sous la forme d'un matériau et/ou d'un état de surface aptes à retarder l'apparition de cristaux; et
- provoquer la rupture de la surfusion grâce à des moyens statiques de rupture de la surfusion pour déclencher l'apparition de la cristallisation, les moyens de rupture de la surfusion comportant au moins un changement de revêtement des parois internes de chaque tube, le changement de revêtement des parois internes se présentant sous la forme d'un changement de matériau et/ou d'un changement de l'état de surface, aptes à rompre la surfusion et permettre l'apparition de cristaux.

19. Procédé selon la revendication précédente, comportant une étape consistant à mélanger continuellement les particules cristallisées de la phase avec la solution lors de la circulation de ladite solution grâce à des organes statiques de mélange de la solution.

20. Procédé selon la revendication précédente, comportant une étape consistant à faire varier dans le temps le débit de l'écoulement de la solution en agissant soit sur une vanne soit sur la pompe.

21. Procédé selon l'une des revendications 18 à 20, comportant une étape consistant à faire varier le débit de la solution grâce à une vanne dans le circuit de circulation.

22. Procédé selon l'une des revendications 18 à 21, comportant une étape consistant à introduire des bulles de gaz dans le circuit (20) de circulation de la solution.

## Claims

1. A device for partial crystallization of a phase in a solution, including at least one pump (1) for circulating the solution in a circuit (20) of a heat exchanger (2) formed with at least one tube (200) in contact with a cooling circuit (22), **characterized in that** the circuit (20) of the exchanger (2) includes
- an area including static means for maintaining supercooling in order to delay the occurrence of crystals, the means for maintaining supercooling including an anti-adhesive coating on at least one portion of the inner walls of each tube (200), the coating appearing as a material and/or a surface condition capable of delaying the occurrence of crystals and
- an area including static means for breaking down supercooling in order to allow occurrence of crystals, the supercooling breakdown means including at least one coating change of the inner walls of each tube, the coating change of the inner walls appearing as a change in material and/or as a change in surface condition, capable of breaking down supercooling and allowing occurrence of crystals.

2. The device according to the preceding claims, further including an area including static units for mixing the solution so that the crystallized particles of the phase are continually mixed with the solution during the circulation of said solution.

3. The device according to claim 1 or 2, wherein the material is hydrophobic plastic or glass.

4. The device according to any of claims 1 to 3, wherein the surface condition has low roughness.

5. The device according to any of claims 1 to 4, wherein the supercooling breakdown means further include at least one change in direction of the circulation of the solution, and/or at least one obstacle (207, 208) to the circulation of the solution on the interior walls of each tube.

6. The device according to any of claims 1 to 5, wherein the material at the supercooling breakdown means is a metal.

7. The device according to any of claims 1 to 6, wherein the change of surface condition at the supercooling breakdown means is effected with view to greater roughness.

8. The device according to any of claims 2 to 7, wherein the mixing units include at least one anti-adhesive coating on at least one portion of the inner walls of each tube (200) and/or at least one change in direction of the circulation of the solution, and/or at least one obstacle (207, 208) to the circulation of the solution on the interior walls of each tube.

9. The device according to any of claims 5 to 8, wherein the change in direction is a bend (201) in the circulation circuit, and/or a baffle (202), and/or at least one change (203) in the inner section of the circulation circuit.

10. The device according to any of claims 5 to 9, wherein the obstacles (207, 208) to the circulation of the solution include needles and/or plates.

11. The device according to any of the preceding claims, wherein the inner section of the circuit increases gradually (204).

12. The device according to any of the preceding claims, wherein the circuit of the exchanger includes at least one valve (4, 5).

13. The device according to any of the preceding claim, wherein the valve is placed upstream or downstream from the exchanger and allows the flow rate of the solution to be adjusted in order to control the crystallization rate or the ice titer.

14. The device according to any of the preceding claims, wherein the pump is able to cause the solution to circulate in a variable way over time.

15. The device according to any of the preceding claims, wherein the circulation circuit includes means (205, 206) for introducing gas bubbles into the solution.

16. The device according to any of the preceding claim, wherein the means (205, 206) for introducing gas are placed in the circulation of the solution or at the walls of the tube.

17. An assembly, **characterized in that** it includes a plurality of devices according to any of the preceding claims.

18. A method for partial crystallization of a phase in a solution, including a step consisting of circulating the solution in a circuit (20) of a heat exchanger (2) formed with at least one tube (200) by at least one pump (1), **characterized in that** it includes a step consisting of:
- maintaining the temperature below the temperature of initial ice formation in order to delay the occurrence of crystals by static means for maintaining supercooling, the means for maintaining supercooling include an anti-adhesive coating on at least one portion of the inner walls of each tube (200), the coating appearing as a material and/or a surface condition capable of delaying the occurrence of crystals; and
- causing breakdown of the supercooling by static supercooling breakdown means in order to trigger the onset of crystallization, the supercooling breakdown means including at least one coating change of the inner walls of each tube, the coating change of the inner walls appearing as a change in material and/or a change in surface condition, capable of breaking down supercooling and allowing occurrence of crystals.

19. The method according to the preceding claim, including a step consisting of continually mixing the crystallized particles of the phase with the solution during the circulation of said solution by static units for mixing the solution.

20. The method according to the preceding claim, including a step consisting of varying the flow rate of the solution over time either by acting on a valve or on the pump.

21. The method according to any of claims 18 to 20, including a step consisting of varying the flow rate of the solution by a valve in the circulation circuit.

22. The method according to any of claims 18 to 21, including a step consisting of introducing gas bubbles into the circulation circuit (20) of the solution.

## Patentansprüche

1. Vorrichtung zur teilweisen Kristallisation einer Phase in einer Lösung, mindestens eine Pumpe (1) zum Umwälzen der Lösung in einem Kreislaufsystem (20) eines Wärmetauschers (2), der aus mindestens einer Röhre (200) gebildet ist, welche mit einem Kühlkreislaufsystem (22) in Kontakt ist, aufweisend, **dadurch gekennzeichnet, dass** das Kreislaufsystem (20) des Tauschers (2) Folgendes aufweist:
- einen Bereich, der statische Mittel zum Aufrechterhalten des unterkühlten Zustands aufweist, um die Kristallbildung zu verzögern, wobei die Mittel zum Aufrechterhalten des unterkühlten Zustands in mindestens einem Teilbereich der Innenwände jeder Röhre (200) eine Antihaftbeschichtung aufweisen, wobei die Beschichtung in Form eines Werkstoffs und/oder eines Oberflächenzustandes vorliegt, die dazu geeignet sind, die Kristallbildung zu verzögern, und
- einen Bereich, der statische Mittel zum Beenden des unterkühlten Zustandes aufweist, um die Kristallbildung zu ermöglichen, wobei die Mittel zum Beenden des unterkühlten Zustandes mindestens einen Beschichtungswechsel der Innenwände jeder Röhre aufweisen, wobei der Beschichtungswechsel der Innenwände in Form eines Wechsels des Werkstoffs und/oder eines Wechsels des Oberflächenzustandes vorliegt, die dazu geeignet sind, den unterkühlten Zustand zu beenden und die Kristallbildung zu ermöglichen.

2. Vorrichtung nach dem vorhergehenden Anspruch, welche weiterhin einen Bereich aufweist, der statische Glieder zum Mischen der Lösung aufweist, sodass die kristallisierten Partikel der Phase beim Umwälzen der Lösung ständig mit dieser Lösung vermischt werden.

3. Vorrichtung nach dem Anspruch 1 oder 2, wobei es sich bei dem Werkstoff um einen hydrophoben Kunststoff oder um Glas handelt.

4. Vorrichtung nach einem der Ansprüche 1 bis 3, wobei der Oberflächenzustand eine geringe Rauigkeit aufweist.

5. Vorrichtung nach einem der Ansprüche 1 bis 4, wobei die Mittel zum Beenden des unterkühlten Zustands weiterhin mindestens eine Änderung der Umwälzrichtung der Lösung und/oder an den Innenwänden jeder Röhre mindestens ein Hindernis (207, 208), welches dem Umwälzen der Lösung entgegenwirkt, aufweisen.

6. Vorrichtung nach einem der Ansprüche 1 bis 5, wobei der Werkstoff, der bei den Mitteln zum Beenden des unterkühlten Zustands eingesetzt wird, ein Metall ist.

7. Vorrichtung nach einem der Ansprüche 1 bis 6, wobei der Wechsel des Oberflächenzustands, der bei den Mitteln zum Beenden des unterkühlten Zustands erfolgt, zu einer stärkeren Rauigkeit führt.

8. Vorrichtung nach einem der Ansprüche 2 bis 7, wobei die Glieder zum Mischen mindestens eine Antihaftbeschichtung in mindestens einem Teilbereich der Innenwände jeder Röhre (200) und/oder mindestens eine Änderung der Umwälzrichtung der Lösung und/oder mindestens ein Hindernis (207, 208) an den Innenwänden jeder Röhre, welches dem Umwälzen der Lösung entgegenwirkt, aufweisen.

9. Vorrichtung nach einem der Ansprüche 5 bis 8, wobei es sich bei der Richtungsänderung um ein Knierohr (201) im Umwälzkreislaufsystem und/oder um eine eingebaute Ablenkvorrichtung (202) und/oder um mindestens eine Innenquerschnittsänderung (203) des Umwälzkreislaufsystems handelt.

10. Vorrichtung nach einem der Ansprüche 5 bis 9, wobei die Hindernisse (207, 208), die dem Umwälzen der Lösung entgegenwirken, Nadeln und/oder Platten aufweisen.

11. Vorrichtung nach einem der vorhergehenden Ansprüche, wobei der Innenquerschnitt des Kreislaufsystems allmählich zunimmt (204).

12. Vorrichtung nach einem der vorhergehenden Ansprüche, wobei das Kreislaufsystem des Tauschers mindestens ein Ventil (4, 5) aufweist.

13. Vorrichtung nach dem vorhergehenden Anspruch, wobei das Ventil dem Tauscher vorgeschaltet oder nachgeschaltet ist und es ermöglicht, die Flussrate der Lösung zu regeln, um deren Kristallisationsgrad oder deren Eisgehalt zu steuern.

14. Vorrichtung nach einem der vorhergehenden Ansprüche, wobei die Pumpe dazu geeignet ist, die Lösung derart umzuwälzen, dass sich Art und Weise dieses Vorgangs zeitweise ändert.

15. Vorrichtung nach einem der vorhergehenden Ansprüche, wobei das Umwälzkreislaufsystem Mittel (205, 206) zum Einbringen von Gasbläschen in die Lösung aufweist.

16. Vorrichtung nach dem vorhergehenden Anspruch, wobei die Mittel (205, 206) zum Einbringen von Gas im Umwälzstrom der Lösung oder an den Wänden einer Röhre angeordnet sind.

17. Gesamteinheit, **dadurch gekennzeichnet, dass** sie mehrere Vorrichtungen nach einem der vorhergehenden Ansprüche aufweist.

18. Verfahren zur teilweisen Kristallisation einer Phase in einer Lösung, welches einen Schritt aufweist, der darin besteht, die Lösung in einem Kreislaufsystem (20) eines Wärmetauschers (2), der aus mindestens einer Röhre (200) gebildet ist, mittels mindestens einer Pumpe (1) umzuwälzen, **dadurch gekennzeichnet, dass** es einen Schritt aufweist, der darin besteht:
- die Temperatur unterhalb der Temperatur, bei welcher der Gefriervorgang einsetzt, zu halten, um die Kristallbildung mittels statischer Mittel zum Aufrechterhalten des unterkühlten Zustands zu verzögern, wobei die Mittel zum Aufrechterhalten des unterkühlten Zustands in mindestens einem Teilbereich der Innenwände jeder Röhre (200) eine Antihaftbeschichtung aufweisen, wobei die Beschichtung in Form eines Werkstoffs und/oder eines Oberflächenzustandes vorliegt, die dazu geeignet sind, die Kristallbildung zu verzögern; und
- mittels statischer Mittel zum Beenden des unterkühlten Zustandes die Beendigung des unterkühlten Zustands hervorzurufen, um die Kristallbildung auszulösen, wobei die Mittel zum Beenden des unterkühlten Zustandes mindestens einen Beschichtungswechsel der Innenwände jeder Röhre aufweisen, wobei der Beschichtungswechsel der Innenwände in Form eines Wechsels des Werkstoffs und/oder eines Wechsels des Oberflächenzustandes vorliegt, die dazu geeignet sind, den unterkühlten Zustand zu beenden und die Kristallbildung zu ermöglichen.

19. Verfahren nach dem vorhergehenden Anspruch, das weiterhin einen Schritt aufweist, der darin besteht, mittels statischer Glieder zum Mischen der Lösung die kristallisierten Partikel der Phase beim Umwälzen der Lösung ständig mit dieser Lösung zu vermischen.

20. Verfahren nach dem vorhergehenden Anspruch, welches einen Schritt aufweist, der darin besteht, die Flussrate der Lösung zeitweise zu ändern, indem entweder ein Ventil oder die Pumpe zur Wirkung gebracht wird.

21. Verfahren nach einem der Ansprüche 18 bis 20, welches einen Schritt aufweist, der darin besteht, die Flussrate der Lösung mittels eines Ventils im Umwälzkreislaufsystem zu ändern.

22. Verfahren nach einem der Ansprüche 18 bis 21, welches einen Schritt aufweist, der darin besteht, Gasbläschen in das Kreislaufsystem (20) zum Umwälzen der Lösung einzubringen.
